(19) Europäisches Patentamt / European Patent Office / Office européen des brevets

(11) **EP 3 050 143 B1**

(12) **EUROPÄISCHE PATENTSCHRIFT**

(45) Veröffentlichungstag und Bekanntmachung des Hinweises auf die Patenterteilung:
**02.08.2017   Patentblatt 2017/31**

(21) Anmeldenummer: **14792373.4**

(22) Anmeldetag: **05.09.2014**

(51) Int Cl.:
*H01M 4/139* (2010.01)      *H01M 4/36* (2006.01)
*H01M 10/0562* (2010.01)      *H01M 10/0565* (2010.01)
*H01M 6/18* (2006.01)      *H01M 4/1391* (2010.01)
*H01M 4/1393* (2010.01)      *H01M 4/1397* (2010.01)
*H01M 10/052* (2010.01)      *H01M 4/02* (2006.01)

(86) Internationale Anmeldenummer:
**PCT/DE2014/000460**

(87) Internationale Veröffentlichungsnummer:
**WO 2015/043564 (02.04.2015 Gazette 2015/13)**

(54) **HERSTELLUNGSVERFAHREN FÜR ELEKTROCHEMISCHE ZELLEN EINER FESTKÖRPERBATTERIE**

METHOD FOR PRODUCING ELECTROCHEMICAL CELLS OF A SOLID-STATE BATTERY

PROCÉDÉ DE FABRICATION D'ÉLÉMENTS ÉLECTROCHIMIQUES D'UNE BATTERIE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2013   DE 102013016131**
**22.10.2013   DE 102013017594**

(43) Veröffentlichungstag der Anmeldung:
**03.08.2016   Patentblatt 2016/31**

(73) Patentinhaber: **Forschungszentrum Jülich GmbH 52425 Jülich (DE)**

(72) Erfinder:
• **FINSTERBUSCH, Martin**
**52428 Jülich (DE)**
• **TSAI, Chih-Long**
**52428 Jülich (DE)**
• **UHLENBRUCK, Sven**
**50259 Pulheim (DE)**
• **BUCHKREMER, Hans, Peter**
**52525 Heinsberg-Schafhausen (DE)**

(56) Entgegenhaltungen:
WO-A1-2012/157119      CH-A5- 638 343
US-A- 3 660 163      US-A- 4 072 803
US-A- 4 243 732

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 050 143 B1

**Beschreibung**

Die Erfindung betrifft die Herstellung einer Festkörperbatterie, insbesondere die Verbindung zwischen einer Anode und einer Kathode über eine nicht Elektronen leitende Elektrolytschicht.

Stand der Technik

Wiederaufladbare Lithium-Ionen-Batterien, im Folgenden auch Li-Ionen-Batterien genannt, haben in den letzten Jahren einen Siegeszug angetreten. Man findet sie bereits in vielen mobilen Geräten vor. Ihr Einsatzgebiet liegt neben Hybrid- und Elektrofahrzeugen auch in der möglichen Speicherung des Stroms aus Wind- oder Solarenergieanlagen. Einigen Anforderungen können heutige Li-Ionen-Batterien jedoch noch nicht genügen, weshalb viele Anstrengungen unternommen werden, neuartige Batteriekonzepte zu erforschen.

Zur Speicherung elektrischer Energie eignen sich besonders elektrochemische Speicher, welche auf der galvanischen Zelle beruhen, umgangssprachlich Batterien genannt. Sie bestehen immer aus einer Anode, einer Kathode und einem Elektrolyt. Batterien können zur einmaligen Verwendung bestimmt (Primärbatterie) oder wieder verwendbar (Sekundärbatterie, Akkumulator) sein.

Dabei gibt es eine Vielzahl von möglichen Materialien für Anode und Kathode, welche zur Klassifizierung herangezogen werden können, die bekanntesten sind wohl Zink-Kohle (Zn-C)-Batterien), Alkali-Mangan (Alkaline)-Batterien, Nickel-Cadmium (Ni-Cd)-Batterien, Nickel-Metallhydrid (Ni-MH)-Batterien und auch Blei (Pb)-Batterien.

Zusätzlich kann auch der Elektrolyt zur Klassifizierung herangezogen werden, z. B. können in Li-Ionen-Batterien Flüssig-, Gel- oder Polymerelektrolyte verwendet werden. Heutige Standardbatterietypen enthalten fast ausschließlich flüssige oder gelartige Elektrolyte.

Diese flüssigen bzw. gelartigen Elektrolyte können erhebliche Sicherheitsrisiken im Falle darstellen. Sie können z. B. starke Säuren oder Laugen sein oder kurzkettige Lösungsmittel enthalten, welche leicht entflammbar sind. Im Falle einer Erhitzung durch z. B. Kurzschluss, kann Elektrolyt austreten und den Nutzer gefährden bzw. sich die gesamte Batterie entzünden. Dies ist z. B. bei Li-ionen Batterien als sogenannter thermal runaway bekannt und hat sowohl die groß-skalige Verwendung dieses Batterietyps in Autos, aber auch Flugzeugen vor erhebliche Probleme gestellt.

Eine neue Art der Batterie, welche die vorgenannten Sicherheitsrisiken inhärent nicht besitzt und damit in diesem Punkt den herkömmlichen Typen deutlich überlegen ist, stellt der Typ Festkörperbatterie bzw. Festkörperelektrolyt-Batterie dar. Hier wird statt des normalerweise flüssigen bzw. mittels Polymeren stabilisierten (Gel) Elektrolyten ein Ionen leitender Feststoff eingesetzt. Dieser kann sowohl organisch sein (Polymere, etc.) oder anorganisch (Keramiken, Gläser, etc.). Entscheidend für die Funktionalität eines Elektrolyten ist dabei die geringe elektronische Leitfähigkeit bei gleichzeitiger hoher ionischer Leitfähigkeit und (elektro-) chemischer Stabilität gegenüber dem Anoden- und Kathoden-Material.

Beispiele für anorganische Festkörper-Ionenleiter sind z. B. Yttrium stabilisiertes Zirkondioxid oder Gadolinium stabilisiertes Ceroxid, welche Sauerstoffionen leiten können und für Metall - Metalloxid Hochtemperaturbatterien als Elektrolyt eingesetzt werden können, welche einen ähnlichen Aufbau wie eine oxidkeramische Brennstoffzelle aufweisen. Weitere Beispiele sind $\beta$-Aluminiumoxid, welches Natrium-Ionen leiten kann und in Na-Flüssigmetall Batterien eingesetzt wird, sowie Lithium-Phosphor-Oxy-Nitrit (LIPON), welches Lithium-Ionen leiten kann und in Lithium-Dünnschichtbatterien eingesetzt wird. Diese Reihe lässt sich für eine Vielzahl weiterer Ionen von Elementen oder Verbindungen fortsetzen ($F^-$, $CO^{2-}$,...), welche für eine etwaige Batterieanwendung in Frage kommen könnten und erhebt daher keinen Anspruch auf Vollständigkeit oder stellt ein Ausschlusskriterium dar. Es sollen nur die prinzipiellen Eigenschaften des Elektrolytmaterials herausgestellt werden.

Bekannt ist beispielsweise in der Forschung eine intrinsisch sichere Lithium-Festkörper Batterie mit Al und Cu Kontakten, einer $LiFePO_4$ Kathode, einem $Li_7La_3Zr_2O_{12}$ Elektrolyt und einer Si Anode. Auch bekannt und bereits kommerzialisiert ist eine Dünnschichtbatterie mit ähnlichem Aufbau, welche von der Firma Infinite Power Solutions und dem Markennamen Thinergy® vertrieben wird. Hochtemperatur Natrium-Batterien, mit dem oben genannten Aluminiumoxid-Festelektroylt werden bereits von der Firma Fiamm Sonick zur Anwendung in Elektrofahrzeugen vertrieben.

Ferner ist aus US 4,072,803 eine Lithium-Halogenid-Batterie bekannt, bei der die Kathoden- und Anodenleitungen in einem umhüllenden Element der Lithium-Anode eingebettet sind. Ferner ist daraus ein Verfahren bekannt, bei dem Lithiumblatt zu einem Lithiumbehälter als umhüllendes Element der Lithium-Anode gefaltet wird und so ein wesentlicher Teril der Kathodenleitung darin eingebettet wird. Dadurch können Batterien unterschiedlicher Größe unter Verwendung der gleichen Form realisiert werden.

Allgemein umfassen bei Batterien im Allgemeinen, sowie bei Festkörperbatterien - egal ob Primär- oder Sekundär-Batterien - die Kathode und die Anode ein ein- oder mehrphasiges Gemisch. Die Phasen sind dabei beispielsweise eine erste Phase a, umfassend das Aktivmaterial für die Ionen- ein- bzw. -auslagerung, eine zweite Phase b, umfassend das Material für die Ionenleitung, und eine weitere Phase c, welches ein Material mit einer elektronischen Leitfähigkeit aufweist. Gegebenenfalls können ein oder mehrere Funktionen auch durch ein Material einer anderen Phase übernommen werden. Die einzelnen Phasen können - müssen aber nicht - im gleichen Aggregatszustand vorliegen und werden im Folgenden als Mischleitende Elektroden bezeichnet.

Bei einer herkömmlichen Lithium-Ionen-Batterie liegt zum Beispiel eine poröse Matrix aus Kohlenstoff auf der Anodenseite vor, welcher sowohl der Einlagerung der Lithium Ionen als auch dem Stromtransport dient. Auf der Kathodenseite liegt eine poröse Matrix aus $LiFePO_4$ und Kohlenstoff vor. Beide Matrizes sind mit einem Flüssigelektrolyten getränkt. Damit liegt auf der Anodenseite ein 2-Phasengemisch (fest - flüssig) und auf der Kathodenseite ein 3-Phasengemisch (fest - fest - flüssig) vor.

Diese Anoden und Kathoden sind jeweils durch einen Elektrolyten getrennt, welcher eine für Elektronen nicht leitende Schicht darstellt aber eine möglichst hohe Ionenleitfähigkeit aufweist. Im Fall der herkömmlichen Li-Ionen-Batterie geschieht dies durch einen zusätzlichen porösen, nicht Elektronen oder Ionen leitenden, mit Elektrolyt getränkten Separator, welcher unter anderem der räumlichen Trennung der flüssigkeitsgetränkten Anode und Kathode dient. Diese räumliche Trennung sollte vorteilhaft möglichst dünn gehalten werden, um den Gesamtinnenwiderstand der Zelle möglichst niedrig zu halten.

Typische Verfahren für die Herstellung oder Auftragung eines Festkörperelektrolyten sind die nachfolgend aufgeführten Verfahren, ohne aber auf diese beschränkt zu sein:

Herstellung dünner Schichten mittels typischer keramischer Verfahren (z. B. Siebdruck, Folienguss, Ink-Jet Drucken), oder mittels physikalischer oder chemischer Dünnschichtverfahren (z. B. physikalische oder chemische Gasphasenabscheidung, Sol-Gel-Verfahren (Dip coating, Spin coating, etc.)) oder auch über thermisches Spritzen (Vakuum- oder atmosphärisches Plasmaspritzen, etc.). Diese Verfahren beruhen alle auf der Aufbringung einer zusätzlichen Elektrolytschicht mit den obengenannten Eigenschaften, niedrige elektronische- und hohe Ionenleitfähigkeit, was höhere Anforderungen an Prozessführung, Materialauswahl und Qualität der Anoden, Kathoden und Elektrolyte stellen kann und den technischen Aufwand und damit die Kosten der Herstellung und des Endproduktes erhöhen kann.

Ausführungsbeispiele für solche Festkörperbatterien bzw. Batterien mit Festkörperelektrolyten aus der Industrie sind bekannt, aber bislang noch eher ein Nischensegment aufgrund aufwendiger Herstellungsmethoden und damit hoher Kosten (pro Kapazitätseinheit). Eine kommerzielle Festkörper-Dünnschichtzelle auf Basis von Lithium wird beispielsweise von der Firma "Infinite Power Solutions" unter dem Namen "Thinergy® MEC200" vermarktet. Dabei wird jede Komponente der Zelle durch ein aufwendiges Gasphasenverfahren hergestellt. Auf diese Art lassen sich nur dünne Elektroden realisieren, welches die Gesamtkapazität der Zelle stark beeinträchtigt.

Ein anderes Anwendungsbeispiel stellt die von FIAMM vermarktete "Zebra" Batterie dar, welche wie oben beschrieben eine Flüssig-Fest-Flüssig Batterie auf Na-Ionen Technik ist und bei ca. 270° Celsius betrieben wird.

## Aufgabe und Lösung

Die Aufgabe der Erfindung ist es, ein neues Verfahren zur Herstellung einer Festkörperbatterie bereit zustellen, welches eine möglichst dünne, Ionen leitende, aber elektrisch isolierende Schicht als Elektrolyt zwischen einer Anode und einer Kathode einer Batteriezelle vorsieht, und dabei einfach und/oder preiswert ist.

Die Erfindung wird gelöst durch ein Verfahren gemäß Hauptanspruch. Vorteilhafte Ausgestaltungen des Verfahrens sind den darauf rückbezogenen Ansprüchen zu entnehmen.

## Gegenstand der Erfindung

Sofern in der nachfolgenden Beschreibung der Erfindung der Begriff Festkörperbatterie verwendet wird, sind damit sowohl Primär- als Sekundär-Batterien umfasst.

Die Grundidee der Erfindung basiert darauf, bei der Herstellung einer Festkörperbatterie auf die Ein- bzw. Aufbringung einer separaten Elektrolytschicht zu verzichten, sondern direkt die in den mischleitenden Elektroden enthaltene ionisch leitende Phase zur elektronischen Separation der Elektroden zu nutzen. Dafür wird bei der Herstellung einer Anode und/oder einer Kathode ein neuer Prozessschritt vorgeschlagen, bei dem die Oberfläche wenigstens einer der hergestellten oder bereitgestellten mischleitenden Elektroden bis in eine bestimmte Tiefe hinein derart modifiziert wird, dass die elektronische Leitfähigkeit in diesem modifizierten Bereich deutlich herabgesetzt bzw. ganz reduziert wird. Dabei sollte die vorhandene ionische Leitfähigkeit in diesem Oberflächenbereich jedoch möglichst wenig beeinträchtigt werden. Der so modifizierte Bereich kann anschließend vorteilhaft die Funktion einer Elektrolytschicht übernehmen.

In einer vorteilhaften Ausgestaltung der Erfindung ist vorgesehen, dass jeweils eine Oberfläche beider mischleitenden Elektroden, d. h. sowohl der Anode als auch der Kathode, auf diese Art modifiziert werden, wobei die Elektrolytschicht beim Zusammenbau dann durch die beiden modifizierten Bereiche zusammen gebildet werden.

Die typischen mischleitenden Elektroden, die sowohl Elektronen als auch Ionen leitend ausgestaltet sind, und im Rahmen dieser Erfindung hergestellt, bzw. eingesetzt werden können, umfassen in der Regel ein ein- oder mehrphasiges Gemisch.

Sinn der erfindungsgemäßen Modifikation der Obertfläche einer Elektrode durch eine zusätzliche Behandlung ist es, einen oberflächennahen Bereich einer oder beider Elektroden derart zu verändern, dass dieser Bereich bzw. die Bereiche die Funktion eines Elektrolyten übernehmen kann bzw. können. Ziel der Modifikation ist es somit, die elektronische Leitfähigkeit im Oberflächenbereich einer mischleitenden Elektrode soweit zu reduzieren, dass nach dem Zusammenfügen von Anode und Kathode eine funktionsfähige Batterie gegeben ist, wobei der modifizierte Oberflächenbereich wenigstens einer der beiden Elektroden gut Ionen leitend, aber schlecht Elektronen leitend ist. Der erfindungsgemäß modifizierte Oberflächenbereich verhindert dadurch einen direkten elektronischen Kontakt zwischen den Elektroden und somit einen Kurzschluss.

Im Rahmen dieser Erfindung wird unter dem Begriff "schlecht Elektronen leitend" eine elektronische Leitfähigkeit von weniger als $1 \times 10^{-8}$ S/cm verstanden. Dieser Wert liegt an der oberen Grenze, um einen elektronischen Kurzschluss zwischen Anode und Kathode regelmäßig zu verhindern. Vorteilhaft ist aber eine elektronische Leitfähigkeit von weniger als $1 \times 10^{-10}$ S/cm. Da die Elektrolytschicht jedoch möglichst dünn ausgestaltet sein sollte, sind für diesen modifizierten Bereich jedoch vorteilhaft noch kleinere elektronische Leitfähigkeiten bis in den Bereich um $1 \times 10^{-12}$ S/cm oder noch geringer besonders erstrebenswert.

Neben der Eignung, die elektronische Leitfähigkeit im Oberflächenbereich einer Elektrode zu reduzieren, sollte die zusätzliche Behandlungsmethode gleichzeitig die Eigenschaft aufweisen, die ionische Leitfähigkeit des modifizierten Oberflächenbereichs der zuvor mischleitenden Elektrode vorteilhaft nicht nachteilig zu beeinträchtigen.

Das bedeutet, dass nach einer solchen zusätzlichen Behandlung der modifizierte Oberflächenbereich die für einen Elektrolyten in der Regel notwenige ionische Leitfähigkeit - im Fall einer Li-Ionen-Batterie von wenigstens $10^{-6}$ S/cm - aufweisen sollte, vorteilhaft jedoch von wenigstens $10^{-4}$ S/cm und besonders vorteilhaft sogar von mehr als $10^{-2}$ S/cm.

Die für eine Festkörperbatterie jeweils benötigte ionische Leitfähigkeit des modifizierten Oberflächenbereichs hängt unter anderem auch noch von dessen Schichtdicke ab, da eine besonders dünne Schichtdicke eine nicht so gute ionische Leitfähigkeit teilweise wieder kompensieren kann.

Im Rahmen der Erfindung wären als geeignete zusätzliche Behandlungsmethoden, welche die elektronische Leitfähigkeit im Oberflächenbereich einer mischleitenden Elektrode zu reduzieren vermögen, ohne die ionische Leitfähigkeit nachteilig zu beeinträchtigen, insbesondere aber nicht abschließend zu nennen:

- chemische Reaktionen mit einem flüssigen Reagenz (z. B. das Ätzen mit einer Säure oder einer Lauge oder auch eine Dotierung);
- chemische Reaktionen mit einem gasförmigen Reagenz oder einem Plasma (z. B. das Erhitzen der Oberfläche in einem Gas, Gasätzen oder auch eine Plasmabehandlung );
- chemische Reaktionen mit einem festen Reagenz (z. B. mit einem Fügemittel, welches beim Zusammenfügen der Kathode und Anode chemisch die Kontaktfläche in der vorgenannten Art verändert;
- physikalische Phasenumwandlungen (z. B. das Erhitzen einer Oberfläche in einem Ofen mit oder ohne Schutzatmosphäre, Erhitzen mittels einer Laserbehandlung oder mittels eines Plasmas).

Als ein geeignetes Beispiel für eine zusätzliche Behandlungsmethode durch eine chemische Reaktion ist das Erhitzen in Sauerstoff, Luft oder Ozon zu nennen, das Ozonätzen mittels eines Plasmas und die Behandlung der Oberfläche mit einer oxidierenden Säure, mit dem z. B. auch Kohlenstoff modifiziert werden kann.

Geeignete Beispiele für eine Phasenumwandlung ist eine Laserbehandlung der Oberfläche in einer inerten Atmosphäre, wie beispielsweise He oder Ar, oder auch das Erhitzen der Oberfläche mittels eines He- oder Ar-Plasmas.

Die Tiefe, bis zu welcher die elektronische Leitfähigkeit der Elektrode durch die zusätzliche Behandlung zerstört werden muss, hängt von diversen Parametern ab. Der wichtigste ist hierbei die elektronische Leitfähigkeit der durch die Modifizierung der Elektroden hergestellten Elektrolytschicht selbst. Für die Funktionsweise als Festkörperbatterie sollte eine ausreichend niedrige Selbstentladung gewährleistet werden. Wünschenswert sind hierbei Werte für die elektronische Leitfähigkeit des Elektrolyten bzw. des modifizierten Oberflächenbereichs von maximal $1 \times 10^{-8}$ S/cm, wobei ein Wert um $1 \times 10^{-10}$ S/cm als besser und ein Wert um oder kleiner als $1 \times 10^{-12}$ S/cm als besonders vorteilhaft ist. Je weiter die elektronische Leitfähigkeit durch die zusätzliche Behandlung in dem modifizierten Bereich des Mischleiters reduziert werden kann, desto geringer kann die Schichtdicke gewählt werden, bis zu der die Behandlung reichen muss.

Der Zusammenhang zwischen der Nennspannung U einer Festkörperbatterie, dem maximalen Selbstentladestrom I, der Elektrodenfläche A, der Schichtdicke des Elektrolyt d, die im Rahmen der Erfindung entweder der Schichtdicke des modifizierten Bereichs einer oder der kumulierten Schichtdicken der modifizierten Bereiche beider Elektroden - sofern sie zusammen den Elektrolyten darstellen - entspricht, und der elektronischen Leitfähigkeit $\sigma$ ist durch die folgenden Formeln gegeben.

$$I = \frac{U}{R} \qquad \text{und} \qquad R = \frac{d}{\sigma A}$$

Somit ergibt sich bei vorgegebener Nennspannung U einer Festkörperbatterie, der Elektrodenfläche A und dem vorgegeben maximalen Selbstentladestrom I, die Tiefe d des zu behandelnden Bereichs in Abhängigkeit von der durch die Behandlung erzielten elektronischen Leitfähigkeit $\sigma$.

$$d = \frac{AU}{I} \sigma$$

Je nach erzielter elektronischer Leitfähigkeit liegen die notwendigen Schichtdicken für den modifizierten Oberflächenbereich in Summe somit typischerweise im Bereich von 1 nm bis zu einigen Zehn $\mu$m.

Weiterhin ist es auch sinnvoll, die nötige Tiefe der Behandlung in Relation zur Korngröße und Phasenverteilung der mischleitenden Elektrode zu wählen. Die gängigen keramischen Pulver, die zur Herstellung einer mischleitenden Elektrode geeignet sind, weisen einen Korngrößenbereich zwischen 1 nm und 1 mm auf. Sinnvoll bzw. relevanter für die meisten herkömmlichen Anwendungen ist hierbei der Unterbereich von 10 nm bis 100 $\mu$m. Ein besonders vorteilhafter Bereich könnte um die 1 $\mu$m Korngröße liegen, dies kann aber je nach spezifischer Anforderung einer Anwendung schwanken.

In herkömmlichen Li-Ionen-Batterien hat sich herausgestellt, dass sich die Leistungsdichte umgekehrt proportional zur Korngröße des Anoden bzw. Kathoden Aktivmaterials verhält, d. h. kleinere Körner - größere, bzw. höhere Entladeströme (kleine Kapazität), während sich die Energiedichte proportionale zur Korngröße des Anoden bzw. Kathoden Aktivmaterials verhält, d. h. größere Körner - niedriger Entladeströme (hohe Kapazität).

Die Oberfläche der so behandelten Elektrode wird durch das erfindungsgemäße Verfahren derart behandelt, dass die elektronische Leitfähigkeit an der Oberfläche der Elektrode zerstört, bzw. deutlich reduziert wird, nicht aber die Ionenleitfähigkeit. Durch diese Behandlung kann dieser behandelte Oberflächenbereich nunmehr die Funktion eines Elektrolyten wahrnehmen. Dabei kann gegebenenfalls, muss aber nicht notwendiger Weise, im gleichen oder einem zweiten Schritt auch das Aktivmaterial modifiziert werden.

Die Modifikation auch des Aktivmaterials kann beispielsweise dann notwendig werden, wenn das Aktivmaterial selbst auch eine nicht zu vernachlässigende elektrische Leitfähigkeit besitzt. So weist beispielsweise das Kathodenmaterial $LiCoO_2$ eine relativ gute elektrische Leitfähigkeit auf, während $FePO_4$ als Kathodenmaterial nur eine sehr niedrige elektrische Leitfähigkeit besitzt.

In einer besonderen Ausgestaltung der Erfindung werden die beiden mischleitenden Elektroden, das heißt sowohl die Anode als auch die Kathode, einer zusätzlichen Behandlung unterzogen, so dass beide Elektroden im Anschluss daran einen Oberflächenbereich mit deutlich reduzierter elektronischer Leitfähigkeit aufweisen.

In diesem Fall können je nach Elektrodenmaterial sowohl identische, als auch unterschiedliche Behandlungsmethoden angewendet werden. Identische Behandlungsmethoden würden prozessbedingt zu weiteren vorteilhaften Einsparungen führen, da sowohl für die Anoden, als auch für die Kathoden lediglich ein einziges zusätzliches Verfahren angewendet werden muss.

In dem Fall, dass sowohl die Anode als auch die Kathode einer zusätzlichen Behandlung unterzogen werden, beziehen sich die vorgenannten Abschätzungen bezüglich der notwendigen Schichtdicke der modifizierten Bereiche, die dann die Elektrolytschicht bilden, folgerichtig auf die Summe der einzelnen modifizierten Schichtdicken von Anode und Kathode.

In einer Ausgestaltung der Erfindung erfolgt die Modifikation der Oberfläche sowohl der Anode als auch der Kathode mit Hilfe eines identischen Verfahrens und die ermittelte notwendige Schichtdicke wird vorteilhaft hälftig auf Anode und Kathode aufgeteilt. Dies hätte den weiteren Vorteil, dass die Prozesseinstellungen nahezu identisch beibehalten werden können, unabhängig davon, ob gerade die Oberfläche einer Anode oder einer Kathode modifiziert werden soll.

Anschließend werden die Anode und die Kathode, wobei wenigstens eine von ihnen eine der vorgenannten Oberflächenbehandlungen erfahren hat, zusammengebracht und in geeigneter Weise verbunden. Dabei soll die Funktionalität gewahrt bleiben, dass eine Wanderung der Ionen in der herzustellenden Batterie durch diese Grenzfläche möglich ist. Die elektronische Verbindung darf hierbei jedoch nicht wiederhergestellt werden, d. h. ein Kurzschluss muss vermieden werden.

Zum Verbinden der beiden Elektroden kann ein materialspezifisches, neues oder auch bereits bekanntes Verfahren eingesetzt werden. Im Falle keramischer Materialien, kann die Verbindung beispielsweise einfach durch Sintern bei erhöhten Temperaturen erfolgen. Die so hergestellte Zelle kann dann weiter zu einem Zellverbund und der eigentlichen Festkörperbatterie weiterverarbeitet werden.

Der Zusammenbau der Festkörperbatterie erfolgt dabei derart, dass sich wenigstens eine der so behandelten Oberflächen der Anode und/oder der Kathode als Grenzbereich zwischen den Elektroden befindet und somit die Funktion des Elektrolyten übernimmt. Auf diese Weise werden die mischleitende Anode und die mischleitende Kathode elektronisch voneinander getrennt, wobei aber die Ionenleitung weiterhin bestehen bleibt.

In dem Ausführungsbeispiel, bei dem beide Elektroden behandelt werden, erfolgt der Zusammenbau bevorzugt derart, dass beide behandelten Oberflächen der Anode und der Kathode benachbart angeordnet werden, und sich somit zwischen den Elektroden befinden. Beide behandelten Oberflächen übernehmen zusammen die Funktion des Elektrolyten.

In einer weiteren Ausgestaltung der Erfindung kann auch eine Reihenschaltung dieser so hergestellten Zellen erfolgen, wobei eine Anode/Kathode-Einheit einer Zelle direkt oder über einen Stromsammler mit der nächsten Kathode/Anode-Einheit zusammengebracht wird, bis die gewünschte Zahl der Wiederholeinheiten für den Stapel erreicht ist.

Eine weitere Ausführungsform der Erfindung berücksichtigt, dass gegebenenfalls auch sehr unterschiedliche Materialien für die ionische oder elektronische Leitfähigkeit in Anode und Kathode verwendet werden. Hier können beispielsweise Materialen mit deutlich unterschiedlicher Leitfähigkeit eingesetzt werden. Daneben oder alternativ können auch unterschiedliche Aktivmaterialien verwendet werden, wobei ein Material z. B. eine deutlich höhere Kapazität aufweist. In diesen Fällen ist zur Herstellung einer Festkörperbatterie auch eine (oder mehrer) Sandwich-Einheit von z. B. 2 Kathoden außen mit einer Anode in der Mitte (oder auch entsprechend umgekehrt) denkbar. Dabei ergeben sich je nach Ausführung in der Regel Vorteile in der Leistungsdichte oder der Energiedichte. Die Sandwich-Einheit kann insbesondere als dreipolige Ausführung vorgesehen sein.

Für die vorgenannte Ausführung ergeben sich verschiedene Varianten bei der Herstellung. So kann es verfahrenstechnisch von Vorteil sein, lediglich bei der mittleren Elektrode zwei gegenüberliegende Oberflächen erfindungsgemäß zu behandeln und diese dann jeweils mit einer unbehandelten Gegenelektrode zu versehen. Oder aber die für außen vorgesehenen Elektroden werden jeweils nur auf einer Seite Oberflächen behandelt und im Anschluss über diesen Bereich mit der unbehandelten mittleren Elektrode verbunden.

Auch die so hergestellten Zellen können in Form einer Reihenschaltung direkt oder über Stromsammler mit der nächsten Sandwich-Einheit zusammengebracht wird, bis die gewünschte Zahl der Wiederholeinheiten für den Stapel erreicht ist.

Beim Zusammenbau der Festkörperbatterie kann die Verbindung zwischen Anode und Kathode optional auch unter Zuhilfenahme von weiteren Prozessschritten oder zusätzlichen Materialien erfolgen, um beispielsweise das Wiederherstellen der elektrischen Verbindung zu unterdrücken und/oder den Ionenübertritt an der Grenzfläche zu erleichtern.

Das Herstellen einer besonders guten Verbindung kann beispielsweise auch den Einsatz von Zusatzstoffen in den mischleitenden Elektroden oder ein zusätzliches Aufbringen von sogenannten Sinterhilfsstoffen (oder Katalysatoren, Flussmittel, etc.) an der Grenzfläche beinhalten. Beispielsweise können im Fall von $Li_7La_3Zr_2O_{12}$ (LLZ) als eine Phase der Elektrode vorteilhaft Li-Salze als Zusatzstoffe eingesetzt werden, die eine Schmelze bilden, oder auch andere Oxide mit einem niedrigerem Schmelzpunkt, wie z. B. $Li_3BO_3$.

Weiter sind darunter auch mechanische oder chemische Prozessschritte zu verstehen, die zur optimalen Verbindung der Oberflächen von Anode und Kathode eingesetzt werden, wie beispielsweise ein vorheriges Aufrauen oder ein vorheriges Erwärmen der Grenzflächen, sowie eine Fixierung unter Druck.

Das erfindungsgemäße Verfahren ermöglicht vorteilhaft einen Herstellungsprozess für eine Festköperbatterie, bei dem zur Herstellung eines Elektrolyten ein bislang zumeist teures und kompliziertes Dünnschichtverfahren für einen separaten Elektrolyten durch ein wesentlich einfacheres Oberflächenbehandlungsverfahren an wenigstens einer der Elektroden ersetzt wird.

Daraus ergeben sich unter anderem Vorteile bezüglich einzustellender Oberflächentoleranzen, bezüglich der Materialauswahl und der Prozessgeschwindigkeit, welche nicht zuletzt Kostenvorteile gegenüber anderen Herstellungsprozessen darstellen.

Das erfindungsgemäße Herstellungsverfahren kann wie folgt zusammengefasst werden und umfasst wenigstens die folgenden Prozessschritte:

- Es werden eine mischleitende Anode und eine mischleitende Kathode hergestellt oder bereitgestellt;
- die Oberfläche wenigstens einer der beiden Elektroden wird durch einen zusätzlichen Verfahrensschritt derart modifiziert, dass in einer oberflächennahen Schicht der Elektrode bei Raumtemperatur die elektronische Leitfähigkeit senkrecht zur Zelle auf weniger als $10^{-8}$ S/cm abgesenkt wird, während die ionische Leitfähigkeit mehr als $10^{-6}$ S/cm beträgt,
- wobei die Modifizierung der Oberfläche wenigstens einer Elektrode durch eine chemische Reaktion mit einem flüssigen, gasförmigen oder festen Reagenz oder durch eine physikalische Phasenumwandlung erfolgt,
- Anschließend werden die Elektroden derart zusammengebracht und in geeigneter Weise zu einer elektrochemischen Zelle verbunden, dass wenigstens eine modifizierte Oberfläche bzw. eine der modifizierten Oberflächen an der Grenzfläche zwischen den beiden Elektroden angeordnet ist, und die Funktion eines Elektrolyten übernimmt.

Spezieller Beschreibungsteil

Nachfolgend wird die Erfindung anhand von geeigneten Materialien, Ausführungsbeispielen und Erläuterungen zu den Prozessschritten näher erläutert.

Konkrete Anwendungsbeispiele für Materialien und weitere Eigenschaften für diese Erfindung sind nachfolgend unter anderem, aber nicht ausschließlich, am Beispiel einer Li-Ionen-Batterie dargestellt.

a) Geeignete Aktivmaterialien für eine mischleitende Kathode für eine Li-Ionen-Batterie (kommerziell erhältlich), die bei dem erfindungsgemäßen Verfahren eingesetzt werden können:

| Kathodenmaterial | $LiCoO_2$ | $LiMn_2O_4$ | $Li(NiCoMn)O_2$ | $LiFePO_4$ |
|---|---|---|---|---|
| Reversible Kapazität (mAh/g) | 140 | 100 | 150 | 145 |
| Arbeitsspannung (V) | 3,6 | 3,8 | 3,8 | 3,2 |
| Energiedichte der Batterie (Wh/kg) | 180 | 100 | 170 | 130 |

Als mögliche weitere geeignete Aktivmaterialien einer mischleitenden Kathode, die erfindungsgemäß eingesetzt und modifiziert werden können, sind zu nennen: $LiNiO_2$, $LiMn_2O_4$ dotiert mit Ni, Co, Fe, und $LiAPO_4$ mit A = Fe, Ni, Co, Mn.

Als geeignete Aktivmaterialien für Natrium-Ionen-Batterien sind unter anderem zu nennen: $NaFePO_4$, $NaCoO_2$, $Na_{2/3}[Ni_{1/3}Mn_{2/3}]O_2$, $NaVPO_4F$, $Na_3V_2(PO_4)_3$.

b) Geeignete Aktivmaterialien für eine mischleitende Anode für eine Li-Ionen-Batterie, die bei dem erfindungsgemäßen Verfahren eingesetzt werden können:

| Anodenmaterial | limitierende Verbindung | mittlere Spannung vs. $Li^+/Li$ (V) | theor. spez. Kapazität (mAh/g) | theor. Kapazitätsdichte (Ah/L) | Volumenausdehnung bei Erreichen der theor. Kapazität (%) |
|---|---|---|---|---|---|
| Kohlenstoffbasiert | $LiC_6$ | 0,1 | 374 | 760 | 12,8 |
| Zinnbasiert | $Li_{4.4}Sn$ | 0,4 | 992 | 7240 | 260 |
| Silizium - basiert | $Li_{4.4}Si$ | 0,3 | 4200 | 9660 | 310 |
| $Li_4Ti_5O_{12}$ | $Li_7Ti_5O_{12}$ | 1,5 | 175 | 610 | < 1 |

Als weiteres mögliches Aktivmaterial einer mischleitenden Anode, welches erfindungsgemäß eingesetzt und modifiziert werden kann, wäre beispielsweise auch Li-Metall zu nennen.

Als geeignete Aktivmaterialien für Natrium-Ionen-Batterien sind unter anderem zu nennen: Kohlenstoff, Natrium-Metall, soweit kompatibel mit dem zu erzeugenden Elektrolyten, und $Na_2Ti_6O_{13}$ verwandte Materialien.

c) Geeignete Materialien als Ionen leitende Phase für die mischleitende Anode, bzw. Kathode (am Beispiel eines keramischen Festkörper - Li-Ionenleiters), die erfindungsgemäß die Elektrolytschicht ausbilden:

Phosphate: $Li_{1+x}Al_xTi_{2-x}(PO_4)_3$ (mit x ~ 0,2), Li-NASICON), $Li_{3+X}PO_{4-x}N_X$ (mit x ~ 0,2), LiPON Glas

Oxide: $Li_{5.5}La_3Nb_{1.75}In_{0.25}O_{12}$, $Li_{6.625}La_3Zr_{1.625}Ta_{0.375}O_{12}$ (Granatstruktur), $Li_{3x}La_{(2/3)-x}TiO_3$ (Perovskit),

Sulfate: $Li_2S - P_2S_5$ system, $Li_{4-x}Ge_{1-x}P_XS_4$ system (thio-LISICON),

Ferner sind auch die als Festelektrolytmaterialien für Natrium-Ionen-Batterien geeignete Materialien, wie $\beta$- bzw. $\beta$''-Aluminiumoxid oder $Na_{1+x}Zr_2Si_xP_{3x}O_{12}$ (0 <x< 3) (NASICON Materialien) zu nennen.

1. Ausführungsbeispiel für das erfindungsgemäße Herstellungsverfahren einer Lithium-Ionen-Festkörper-Batteriezelle:

Herstellung einer mischleitenden Kathode umfassend:

elektronisch leitende Phase:     35 Vol.-%     C

(fortgesetzt)

| | | |
|---|---|---|
| ionisch leitende Phase: | 35 Vol.-% | $Li_7La_3Zr_2O_{12}$ (LLZ) |
| Aktivmaterial: | 30 Vol.-% | $LiFePO_4$ |

Die Kapazität der Kathode mit einer vorgegebener Schichtdicke vom 60 $\mu$m berechnet sich aus dem Aktivmaterial ($LiFePO_4$) mit der Dichte von 3,6 g/cm$^3$, der reversiblen Kapazität von 145 (mAh/g) bei 30 Vol.-% zu:

$$0,3 \cdot 145 \frac{mAh}{g} \cdot 3,6 \frac{g}{cm^3} \cdot 10 cm^2 \cdot 60 \times 10^{-4} cm = 9,4 mAh$$

Herstellung einer mischleitenden Anode umfassend:

| | | |
|---|---|---|
| elektronisch leitende Phase & Aktivmaterial: | 50 Vol.-% | C |
| ionisch leitende Phase: | 50 Vol.-% | $Li_7La_3Zr_2O_{12}$ |

Die Mindestdicke der Anode (C), die dieselbe Kapazität wie die Kathode aufweisen sollte, berechnet sich mit der Dichte (Graphit) von 2,1 g/cm$^3$, der theoretischen spezifischen Kapazität von 374 (mAh/g) bei 50 Vol.-% zu:

$$\frac{9,4 mAh}{0,5 \cdot 374 \frac{mAh}{g} \cdot 2,1 \frac{g}{cm^3} \cdot 10 cm^2} = 24 \times 10^{-4} cm = 24 \mu m$$

Damit ergeben sich als Spezifikationen einer so hergestellten Zelle:

| | | |
|---|---|---|
| - Zellspannung: | | 3,2 V |
| - Abmessungen: | Dicke der Kathode: | 60,0 $\mu$m |
| | Dicke der Anode: | 24,0 $\mu$m |
| | Dicke Stromableiter: 2x | 20,0 $\mu$m |
| | Gesamtdicke Zelle: | 124,0 $\mu$m |
| | Fläche: | 10,0 cm$^2$ |
| - Mögliche Kapazität: | Zelle | 9,4 mAh |
| | 1 mm dicke Batterie (8 Zellen) | 75,2 mAh |

2. Ausführungsbeispiel für das erfindungsgemäße Herstellungsverfahren einer Natriumionen-Festkörper-Batteriezelle:

Kathodenaktivmaterial: $NaFePO_4$ mit 154mAh/g und ca. 2,8 V gegen eine C Anode mit 187 mAh/g und einem $\beta$-$Al_2O_3$ Festelektrolyt.
Herstellung einer mischleitenden Kathode umfassend:

| | | |
|---|---|---|
| elektronisch leitende Phase: | 35 Vol.-% | C |
| ionisch leitende Phase: | 35 Vol.-% | $\beta$ $Al_2O_3$ |
| Aktivmaterial: | 30 Vol.-% | $NaFePO_4$ |

Die Kapazität der Kathode mit einer vorgegebener Schichtdicke vom 60 $\mu$m berechnet sich aus dem Aktivmaterial ($NaFePO_4$) mit der Dichte von 3,66 g/cm$^3$, der reversiblen Kapazität von 154 (mAh/g) bei 30 Vol.-% zu:

$$0,3 \cdot 154 \frac{mAh}{g} \cdot 3,66 \frac{g}{cm^3} \cdot 10 cm^2 \cdot 60 \times 10^{-4} cm = 10,1 mAh$$

Herstellung einer mischleitenden Anode umfassend:

| elektronisch leitende Phase & Aktivmaterial: | 50 Vol.-% | C |
|---|---|---|
| ionisch leitende Phase: | 50 Vol.-% | $\beta$ Al$_2$O$_3$ |

Die Mindestdicke der Anode (C), die dieselbe Kapazität wie die Kathode aufweisen sollte, berechnet sich mit der Dichte (Graphit) von 2,1 g/cm$^3$, der theoretischen spezifischen Kapazität von 187 (mAh/g) bei 50 Vol.-% zu:

$$\frac{10,1 mAh}{0,5 \cdot 187 \frac{mAh}{g} \cdot 2,1 \frac{g}{cm^3} \cdot 10 cm^2} = 51 \times 10^{-4} cm = 51 \mu m$$

Spezifikationen einer so hergestellten Zelle:

| - Zellspannung: | | 2,8 V |
|---|---|---|
| - Abmessungen: | Dicke der Kathode: | 60,0 $\mu$m |
| | Dicke der Anode: | 51,0 $\mu$m |
| | Dicke Stromableiter: 2x | 20,0 $\mu$m |
| | Gesamtdicke Zelle: | 151,0 $\mu$m |
| | Fläche: | 10,0 cm$^2$ |
| - Mögliche Kapazität: | Zelle | 10,1 mAh |
| | 1 mm dicke Batterie (6,6 Zellen) | 66,7 mAh |

d) Berechnung einer möglichen notwendigen Tiefe, bis in welche die erfindungsgemäße Oberflächenbehandlung die elektronische Leitfähigkeit verringern sollte:

Die Tiefe, bis zu welcher die elektronische Leitfähigkeit zerstört bzw. deutlich verringert werden muss, hängt von diversen Parametern ab. Der wichtigste ist hierbei die elektronische Leitfähigkeit des durch die Modifizierung der Elektroden hergestellten Elektrolyten selbst. Es muss dabei eine ausreichend niedrige Selbstentladung gewährleistet werden. Wünschenswert sind hierbei Werte für die elektronische Leitfähigkeit des Elektrolyten bzw. der veränderten Oberfläche von < 1 x 10$^{-8}$ S/cm, wobei ein Wert um 1 x 10$^{-12}$ S/cm als besonders vorteilhaft anzusehen ist.

Als Beispielrechnung ergibt sich bei der Standardzelle aus dem obigen 1. Ausführungsbeispiel für die Lithium-Ionen-Batterie mit 3,2 V, einer Fläche von 10 cm$^2$ und einem maximalen Selbstentladestrom von 0,6 $\mu$A, eine Schichtdicke von 500 $\mu$m für einen Elektrolyt, für den die elektronischen Leitfähigkeit auf 1 x 10$^{-9}$ S/cm reduziert werden könnte. Sollte die elektronische Leitfähigkeit des Elektrolyten sogar auf ca. 1 x 10$^{-12}$ S/cm reduziert werden können, ergäbe sich eine entsprechend kleinere notwendige Schichtdicke von ca. 0,5 $\mu$m.

Der Wert des Selbstentladestroms wurde hierbei zu 0,6 $\mu$A geschätzt, da 5 % der maximalen Kapazität pro Monat als Selbstentladung bei guten Lithium-Polymer (Akkus für MP3-player, Kameras, etc.) ein typischer Wert ist.

Für das vorgenannte 1. Ausführungsbeispiel einer Lithium-Ionen-Festkörper-Batteriezelle ergäbe sich somit als Selbstentladestrom:

5 % von 9,4 mAh pro Zelle: $0,05 \cdot 9,40 mAh = 0,47 mAh$

$$\text{pro Monat (720 h)} \rightarrow \frac{0,47 \times 10^{-3} Ah}{720 h} = 0,65 \times 10^{-6} A = 0,65 \mu A$$

Sofern der behandelte Oberflächenbereich auf eine elektronische Leitfähigkeit von 1 x 10$^{-9}$ S/cm reduziert werden könnte, ergäbe dies als notwendige Schichtdicke eines herzustellenden Elektrolyten:

$$d = \frac{AU}{I} \sigma = \frac{10 cm^2 \cdot 3,2 V}{0,65 \times 10^{-6} A} \cdot 1 \times 10^{-9} \frac{A}{V cm} = 0,05 cm = 500 \mu m$$

Sofern der zu behandelnde Oberflächenbereich im Ergebnis sogar eine elektronische Leitfähigkeit von nur 1 x $10^{-12}$ S/cm aufweisen würde, verringert sich die notwendige Schichtdicke eines herzustellenden Elektrolyten auf:

$$d = \frac{AU}{I}\sigma = \frac{10cm^2 \cdot 3,2V}{0,65 \times 10^{-6} A} \cdot 1 \times 10^{-12} \frac{A}{Vcm} = 0,5 \times 10^{-4} cm = 0,5 \mu m$$

Weiterhin ist es auch sinnvoll, die nötige Tiefe der Oberflächenbehandlung in Relation zur Korngröße und Phasenverteilung der mischleitenden Elektroden zu wählen. Die Korngrößen der geeigneten gängigen keramischen Pulver liegen regelmäßig im Bereich zwischen 1 nm und 1 mm. Sinnvoll bzw. relevanter ist hierbei für die meisten herkömmlichen Anwendungen der Unterbereich von 100 nm bis 100 $\mu$m. Ein optimaler Bereich könnte um die 1 $\mu$m Korngröße liegen, dies kann aber je nach spezifischer Anforderung einer Anwendung schwanken.

Für das vorgenannte Ausführungsbeispiel mit einer elektronischen Leitfähigkeit der LLZ-Phase (ionisch leitende Phase) von ca. 1 x $10^{-11}$ S/cm bei Raumtemperatur und mit einem gewünschten Leckstrom (Selbstentladestrom) von 0,65 $\mu$A ergibt sich die notwendige Schichtdicke für den zu modifizierenden Oberflächenbereich von ca. 5 $\mu$m. Für den Fall, dass die Oberflächen beider Elektroden mittels Oberflächenbehandlung in gleicher Weise bearbeitet werden sollen, sollte die elektronisch leitfähige Phase bei jeder Elektrode beispielsweise jeweils 2,5 $\mu$m tief zerstört, bzw. auf den entsprechenden vorgegebenen Wert reduziert werden. Dies ist mit der angestrebten Korngröße von ca. 1 $\mu$m der LLZ Matrix ein realistischer Wert.

e) Erfindungsgemäß geeignete Oberflächenbehandlungsmethoden:

Als eine konkrete Behandlungsmethode, die die erfindungsgemäße Modifizierung der mischleitenden Elektrodenoberfläche bewirken könnte, ist die thermische Behandlung zu nennen, bei der sich beispielsweise Kohlenstoff, als elektrisch leitfähige Phase, durch Erhitzen auf Temperaturen oberhalb von 600 °C in einer Sauerstoff haltigen Atmosphäre verbrennen lässt. Das der Oberfläche kann beispielsweise in einem herkömmlichen Ofen oder einem Halogenofen mit hoher Aufheizrate erfolgen, in welchen Luft oder Sauerstoff eingeblasen wird, oder auch mittels einer Laserbestrahlung in Luft erfolgen und führt regelmäßig zu einem Ausbrennen des Kohlenstoffs aus dem Oberflächenbereich, wobei insbesondere die Einwirkzeit die Tiefe der Austragung bestimmt.

Damit beim Erhitzen im Ofen nicht alle Seiten der Elektrode der thermischen Behandlung unterzogen werden, können die nicht für eine Behandlung vorgesehenen Seiten beispielsweise folgendermaßen geschützt werden:

1) Erhitzen in Schutzpulver (z. B.. Keramik oder Kohlenstoff etc.), d. h. die Probe wird so eingebettet, dass nur noch die für eine Behandlung vorgesehenen Seite freiliegt.

2) Einwickeln der Elektrode in eine dünne Folie (z. B. Gold, Platin, andere Metall mit hohem Schmelzpunkt), d. h. die Probe mit der zu schützenden Seite auf die Folie legen und diese an den Seiten hochbiegen, ohne die für eine Behandlung vorgesehenen Seite zu bedecken.

Diese Abbrennvorgänge sind technisch bereits gut untersucht und Abbrennraten wurden bereits für verschiedene Kohlenstoffmodifikationen untersucht, beispielsweise bei der Herstellung von Hohlräumen in Metallgusskörpern (DE19832718 A1) oder für die Beständigkeit von Kohlenstofffaser-Verbundwerkstoffe (Untersuchungen zur Oxidationsbeständigkeit von Graphitfolien für Wärmespeicher Thomas Bauer Deutsches Zentrum für Luft- und Raumfahrt e.V. (DLR) Institut für Technische Thermodynamik Arbeitskreis Thermophysik Sitzung, Karlsruhe am 4/5. März 2010).

Das Elektrolytmaterial (ionisch leitende Phase) $Li_7La_3Zr_2O_{12}$ (LLZ) zersetzt sich hingegen erst ab > 1250 °C und ist davon somit nicht betroffen.

Zusätzlich könnte die Temperatur auch noch weiter, bis beispielsweise 800 °C, erhöht werden. Bei dieser Temperatur könnte sich auch das Aktivmaterial $LiFePO_4$ (LFP) in der Kathode zersetzten und so zusätzlich noch mögliche Kurzschlüsse über das Aktivmaterial verhindert werden.

Eine Alternative zu dem vorgenannten Verfahren könnte auch das Herauslösen des Kohlenstoffs mit Hilfe einer stark oxidierenden Säure sein, z. B. mit Hilfe von Schwefelsäure (ggf. heißer Schwefelsäure) oder Salpetersäure. Das Endprodukt beim Einsatz von Salpetersäure wäre beispielsweise Mellitsäure ($C_6(CO_2H)_6$), welche zusätzlich als Katalysator $V_2O_5$ eingesetzt werden kann um die Umsetzung zu erhöhen.

Zusätzlich ist auch eine elektrochemische Oxidation des Kohlenstoffs möglich, z. B. unter Zuhilfenahme von Hydroxidschmelzen (LiOH, KOH oder NaOH) und Anlegens einer Spannung, wie es bei alkalischen Brennstoffzellen (AFC) oder Direktkohlenstoff-Brennstoffzelle (DCFC) bekannt ist. Wobei wieder Stromstärke und Einwirkzeit die Schichttiefe der Oxidation bestimmen. (Betriebstemperatur um 700°C, Graphit in den Mischelektroden wirkt als Anode und "Brennstoff", Typische Stromdichten um 100 mA/cm$^2$ bei 0,45 V).

Sollten die beiden vorherigen Methoden inkompatibel mit dem verwendeten Elektrolytmaterial sein, weil beispielsweise die Elektrode ein anderes Material als $Li_7La_3Zr_2O_{12}$ (LLZ) aufweist, z. B. ein Phosphat, welches bereits bei T > 800 °C zersetzt wird, so kann der Kohlenstoff beispielsweise auch schonender mittels einer Ozon-Reinigung entfernt werden. Ein solches Verfahren findet in ähnlicher Form bei der Si-Wafer Reinigung in der Industrie Verwendung. Da auch bei mischleitenden Anoden häufig Kohlenstoff als elektrische Phase verwendet wird, kann das gleiche Verfahren vorteilhaft auch für die Behandlung einer Anode eingesetzt werden.

Bei allen vorgenannten Maßnahmen, insbesondere auch beim Erhitzen in einem Ofen sind entsprechende Maßnahmen zu treffen, damit nur die Oberfläche, die entsprechend modifiziert werden soll, durch die Behandlung auch in entsprechender Weise modifiziert wird.

Bei der Erwärmung im Ofen kann beispielsweise die Elektrode an den nicht zu modifizierten Oberflächen dadurch geschützt werden, dass diese Oberflächen mit einer Schutzschicht, beispielsweise einer zusätzlichen Graphitschicht, versehen wird. Bei einer Behandlung mit einem flüssigen Reagenz kann die Elektrode beispielsweise nur mit der zu modifizierenden Oberfläche in die Flüssigkeit getaucht werden, oder die zu modifizierende Oberfläche wird nur oberflächig mit der Flüssigkeit benetzt.

Die nachfolgenden Tabellen geben exemplarisch im Sinne der Erfindung weitere mischleitende Anoden und Kathoden in Kombination mit dafür jeweils geeigneten Oberflächenbehandlungsverfahren an:

| Anode | herzustellender "Elektrolyt" | Leitzusatz (elektrisch) | Behandlungsmethode |
|---|---|---|---|
| $Li_{4.4}Sn$ | $Li_{1+x}Al_xTb_{2-x}(PO_4)_3$ | Sn (=Anode) | $O_3$ Plasma oder HCl Lösung |
| Li - Metall | LiPON | Li-Metall (=Anode) | Oxidieren in Luft oder Sauerstoff oder Nitrieren in $N_2$ |
| $Li_{4.4}Si$ | $Li_7La_3Zr_2O_{12}$ | B (dotiertes Si) | Oxidieren bei 800 °C in Luft (Ofen) |
| Na-Metall | $\beta$ $Al_2O_3$ | Na (=Anode) | $Cl_2$ Gas → NaCl Bildung |
| $Na_2Ti_6O_{13}$ | $Na_{1+x}Zr_2Si_xP_{3x}O_{12}$ | C | Erhitzen in Sauerstoff / Luft oder oxidierende Säure |
| Kathode | herzustellender "Elektrolyt" | Leitzusatz (elektrisch) | Behandlungsmethode |
| $LiMn_2O_4$ | $Li_{1+x}Al_xTi_{2-x}(PO_4)_3$ | C | $O_3$ Plasma oder oxidierende Säure |
| $LiCoO_2$ | LiPON | Co | Oxidieren in Luft oder Sauerstoff oder HCl Säure |
| $Li(NiCoMn)O_2$ | $Li_7La_3Zr_2O_{12}$ | Ni | Oxidieren in Luft oder Sauerstoff oder HCl Säure |
| $NaCoO_2$, | $\beta$ $Al_2O_3$ | Co | Oxidieren in Luft oder Sauerstoff oder HCl Säure |
| $Na_{2/3}[Ni_{1/3}Mn_{2/3}]O_2$ | $Na_{1+x}Zr_2Si_xP_{3x}O_{12}$ | C | Erhitzen in Sauerstoff / Luft oder oxidierende Säure |

f) Behandlung von Anode und/oder Kathode:

Die Entscheidung, ob die Anoden- und Kathodenoberflächen, welche für die Festkörperbatterie zusammengefügt werden sollen, noch zusätzlich behandelt werden müssen und welche Entscheidung die optimalen Ergebnisse hervorbringt, hängt unter anderem von der elektronisch leitenden Phase der Anode und Kathode und der Kompatibilität von Elektrodenmaterial und Behandlungsmethode ab.

Sofern beide mischleitenden Elektroden die gleiche Phase aufweisen, welche für die elektronische Leitfähigkeit ursächlich ist, ist es unter Umständen möglich, das gleiche Verfahren für die Reduktion der elektronischen Leitfähigkeit an der Oberfläche von sowohl Kathode als Anode zu benutzen. Dies könnte großtechnisch unter dem Gesichtspunkt der Prozessgeschwindigkeit vorteilhaft sein. So könnte die Behandlung einer doppelten Fläche bis in eine definierte Tiefe vorteilhafter sein, als die Behandlung nur einer Oberfläche dann aber bis in die doppelte Tiefe.

Sofern die anderen Phasen, d. h. das Aktivmaterial und die Ionen leitfähige Phase, der beiden Elektroden kompatibel mit dem gewählten Oberflächenverfahren sind, können vorteilhaft gleiche Verfahren für beide Elektroden angewendet werden. Andernfalls müssen gegebenenfalls, um den vorgenannten Vorteil der Prozessgeschwindigkeit zu erhalten, zwei unterschiedliche Oberflächenbehandlungsmethoden gewählt werden, was dann möglicherweise aber zu höheren Investitionskosten führen könnte.

Sofern die einzusetzenden Anode und Kathode zwei unterschiedliche Materialien für die elektronische Leitfähigkeit aufweisen oder eine dieser Phase zwei Eigenschaften besitzt, welche sich nicht unabhängig voneinander beeinflussen lassen, könnte es sich eventuell anbieten, nur eine der mischleitenden Elektroden zu behandeln.

g) Geeignete Methoden für die Verbindung von Anode und Kathode an der/den behandelten Oberfläche(n):

In einem konkreten Ausführungsbeispiel der Erfindung wurden exemplarisch $Li_7La_3Zr_2O_{12}$ (LLZ) Matrizes, wie sie auch nach der erfindungsgemäßen Modifizierung einer Oberfläche einer mischleitendenden Anode und Kathode auftreten könnten, aufeinander gelegt und ohne Druck bei 1200 °C für 35 Stunden in Luft gesintert. Als Vergleich wurde eine gleichgroße Probe aus LLZ-Matrix genommen. Untersucht wurde die Leitfähigkeit der Probe durch die Grenzfläche und wie sich diese durch die Kontaktierung verändert. Als Ergebnis wurde festgestellt, dass sich die Gesamtleitfähigkeit im Vergleich zu der durchgehenden Vergleichsprobe gleicher Größe lediglich von $8,8 \times 10^{-5}$ S/cm um den Faktor 1,5 auf $5,8 \times 10^{-5}$ S/cm reduzierte.

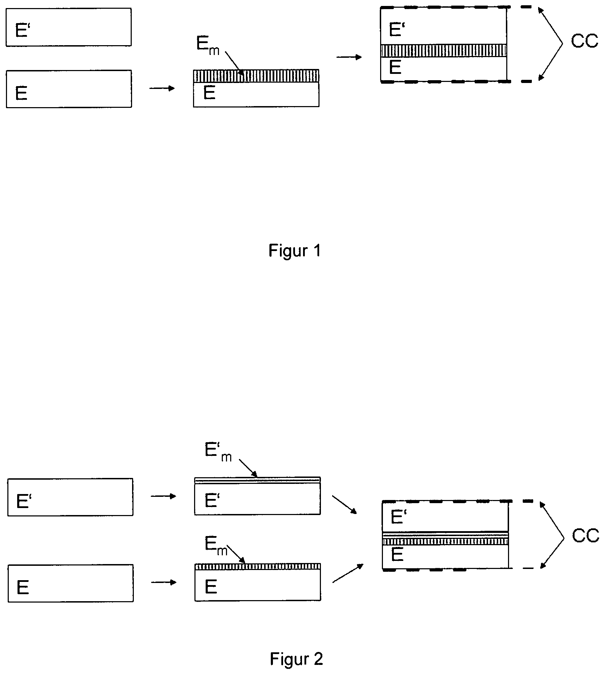

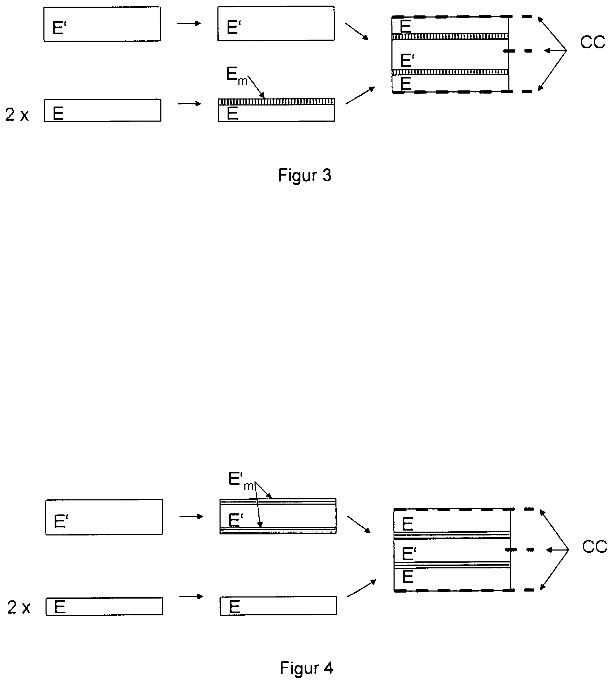

In den Figuren 1 bis 4 sind unterschiedliche Ausgestaltungen der möglichen Verbindungsbildung der beiden Elektroden zu einer elektro-chemischen Zelle dargestellt. In den Figuren bedeuten E = mischleitenden Elektroden (Anode oder Kathode) und E' = entsprechende mischleitende Gegenelektrode (Kathode oder Anode). $E_m$ charakterisiert den modifizierten Oberflächenbereich der Elektrode E und $E'_m$ den modifizierten Oberflächenbereich der Gegenelektrode E'. Mit CC sind Stromabnehmer gekennzeichnet.

In den Figuren 1 und 2 sind schematisch alternative Herstellungsrouten für eine elektrochemische Zelle dargestellt, je nachdem ob lediglich eine mischleitende Elektrodenoberfläche modifiziert wird, oder sowohl die der Anode als auch die der Kathode.

In den Figuren 3 und 4 sind mögliche Abwandlungen bzw. Anordnungsvarianten in Form einer Sandwich-Einheit dargestellt, welche für bestimmte Materialsysteme regelmäßig vorteilhaft höhere Spannungen, bzw. Stromdichten und damit höhere Energiedichten bzw. Leistungsdichten ergeben.

h) Erkennungsmerkmale einer mittels dieses Patentanspruchs hergestellten Zelle:

Durch die Oberflächenbehandlung wird die Ionen leitende Phase im Idealfall nicht verändert, womit auch die Struktur an der späteren Zusammenfügungsstelle erhalten bleibt. Wird diese beim finalen Zusammenfügen der mischleitenden Anode und Kathode auch nicht verändert, kann dieser Bereich gegebenenfalls durch geeignete Mikroskopie-Verfahren leicht identifiziert werden. Dabei könnte der unterschiedliche Kontrast der modifizierten bzw. das komplette Fehlen der elektrisch leitfähigen Phase in der ansonsten nicht modifizierten Matrix der ionisch leitenden Phase ausgenutzt werden.

## Patentansprüche

1. Verfahren zur Herstellung wenigstens einer elektrochemischen Zelle einer Festkörperbatterie, umfassend eine mischleitende Anode, eine mischleitende Kathode, sowie eine zwischen Anode und Kathode angeordneten Elektrolytschicht, mit den Schritten,

   - eine mischleitende Anode wird hergestellt oder bereit gestellt,
   - eine mischleitende Kathode wird hergestellt oder bereit gestellt,
   - die Oberfläche wenigstens einer der beiden Elektroden wird durch einen zusätzlichen Verfahrensschritt derart modifiziert, dass in einer oberflächennahen Schicht der Elektrode bei Raumtemperatur die elektronische Leitfähigkeit senkrecht zur Zelle auf weniger als $10^{-8}$ S/cm abgesenkt wird, während die ionische Leitfähigkeit mehr als $10^{-6}$ S/cm beträgt,
   - wobei die Modifizierung der Oberfläche wenigstens einer Elektrode durch eine chemische Reaktion mit einem flüssigen, gasförmigen oder festen Reagenz oder durch eine physikalische Phasenumwandlung erfolgt,
   - im Anschluss werden die Anode und die Kathode derart zu einer Festkörperbatterie zusammengebaut, dass die oberflächenmodifizierte Schicht wenigstens einer Elektrode an der Grenze zwischen Anode und Kathode als Elektrolytschicht angeordnet wird, und so die mischleitenden Elektroden dadurch elektronisch getrennt werden.

2. Verfahren nach vorhergehendem Anspruch, bei dem eine Anode umfassend $LiC_6$, $Li_{4,4}Sn$, $Li_{4,4}Si$, $LiTi_5O_{12}$, $Na_2Ti_6O_{13}$ Na oder Li Metall als Aktivmaterial eingesetzt wird.

3. Verfahren nach einem der Ansprüche 1 bis 2, bei dem eine Kathode umfassend $LiCoO_2$, $LiMn_2O_4$, $Li(Ni,Co,Mn)O_2$, $LiFePO_4$, $LiNi_xCo_{1-x}O_2$, $LiNi_xMn_{2-x}O_4$, $NaFePO_4$, $NaCoO_2$, $Na_{2/3}[Ni_{1/3}Mn_{2/3}]O_2$, $NaVPO_4F$ oder $Na_3V_2(PO_4)_3$ als Aktivmaterial eingesetzt wird.

4. Verfahren nach einem der Ansprüche 1 bis 3, bei dem die Modifizierung der Oberfläche wenigstens einer Elektrode durch eine chemische Reaktion der Elektrode mit einem flüssigen Reagenz erfolgt.

5. Verfahren nach einem der Ansprüche 1 bis 3, bei dem die Modifizierung der Oberfläche wenigstens einer Elektrode durch eine chemische Reaktion der Elektrode mit einem Feststoff erfolgt.

6. Verfahren nach einem der Ansprüche 1 bis 3, bei dem die Modifizierung der Oberfläche wenigstens einer Elektrode durch eine chemische Reaktion der Elektrode mit einem gasförmigen Reagenz erfolgt.

7. Verfahren nach einem,der Ansprüche 1 bis 3, bei dem die Modifizierung der Oberfläche wenigstens einer Elektrode durch eine physikalische Phasenumwandlung erfolgt.

8. Verfahren nach einem der Ansprüche 1 bis 7, bei dem beide Elektrodenoberflächen modifiziert werden.

9. Verfahren nach einem der Ansprüche 1 bis 8, bei dem die Schichtdicke der modifizierten Oberfläche oder der modifizierten Oberflächen beim Zusammenbau in Summe eine Schichtdicke von wenigstens 0,1 nm und maximal 100 $\mu$m beträgt, insbesondere eine Schichtdicke zwischen 0,1 $\mu$m und 10 $\mu$m aufweist.

10. Verfahren nach einem der Ansprüche 1 bis 9, bei dem durch die Modifizierung der Oberfläche wenigstens einer Elektrode bei Raumtemperatur die elektronische Leitfähigkeit senkrecht zur Zelle auf weniger als $10^{-9}$ S/cm und vorteilhaft auf weniger als $10^{-12}$ S/cm abgesenkt wird.

11. Verfahren nach einem der Ansprüche 1 bis 10, bei dem beim Zusammenbau der beiden Elektroden mit wenigstens einer oberflächennahen modifizierten Schicht ein Zusatzstoff an der Grenzfläche eingebracht wird.

12. Verfahren nach einem der Ansprüche 1 bis 11, bei dem die ionische Leitfähigkeit bei Raumtemperatur nach der Modifizierung der Oberfläche in diesem Bereich wenigstens $10^{-4}$ S/cm aufweist, insbesondere jedoch mehr als $10^{-2}$ S/cm.

## Claims

1. Process for manufacturing at least one electrochemical cell of a solid state battery comprising a mixed conductor anode, a mixed conductor cathode, and an electrolyte layer arranged between the anode and cathode, with the following steps:

   - a mixed conductor anode is manufactured or made available,
   - a mixed conductor cathode is manufactured or made available,
   - the surface of at least one of the two electrodes is modified by an addition process stage in such a manner that in a layer close to the surface of the electrode, the electrical conductivity at right angles to the cell is reduced at room temperature to less than $10^{-8}$ S/cm, whilst ionic conductivity amounts to more than $10^{-6}$ S/cm.
   - in which surface modification of at least one electrode takes place by a chemical reaction with a liquid, gaseous or solid reagent or by a physical phase conversion.
   - the anode and cathode are then assembled into a solid state battery in such a manner that the surface-modified layer of at least one electrode is arranged as an electrolyte layer and the mixed conductor electrodes are thus electronically separated thereby.

2. Process in accordance with the preceding claim, in which an anode comprising $LiC_6$, $Li_{4,4}Sn$, $Li_{4,4}Si$, $LiTi_5O_{12}$, $Na_2Ti_6O_{13}Na$ or Li metal is used as the active material.

3. Process in accordance with one of claims 1 to 2, in which one cathode comprising $LiCoO_2$ $LiMn_2O_4$, $Li(Ni,Co,Mn)O_2$, $LiFePO_4$, $LiNi_xCo_{1-x}O_2$, $LiNi_{,x}Mn_{2-x}O_4$, $NaFePO_4$, $NaCoO_2$ $Na_{2/3}[Ni_{1/3}Mn_{2/3}]O_2$, $NaVPO_4F$ or $Na_3V_2(PO_4)_3$ is used as the active material.

4. Process in accordance with one of claims 1 to 3, in which modification of the surface of at least one electrode takes place by a chemical reaction of the electrode with a liquid reagent.

5. Process in accordance with one of claims 1 to 3, in which modification of the surface of at least one electrode takes place by a chemical reaction of the electrode with a solid material.

6. Process in accordance with one of claims 1 to 3n in which modification of the surface of at least one electrode takes place by a chemical reaction of the electrode with a gaseous reagent.

7. Process in accordance with one of claims 1 to 3, in which the surface modification of at least one electrode takes place by a physical phase conversion.

8. Process in accordance with one of claims 1 to 7, in which the surfaces of both electrodes are modified.

9. Process in accordance with one of claims 1 to 8, in which as regards the assembly of the modified surface or modified surfaces the total layer thickness amounts to at least 0.1 nm and a maximum of 100 $\mu$m, and in particular has a layer thickness of between 0.1 $\mu$m and 10 $\mu$m.

10. Process in accordance with one of claims 1 to 9, in which by modifying the surface of at least one electrode at room temperature, the electrical conductivity at right angles to the cell is reduced to less than $10^{-9}$ S/cm and favourably to less than $10^{-12}$ S/cm.

11. Process in accordance with one of claims 1 to 10, in which as regards the assembly of both electrodes with at least one modified layer close to the surface, an additive is introduced to the boundary surface.

12. Process in accordance with one of claims 1 to 11, in which the ionic conductivity at room temperature after modification of the surface in this area is at least $10^{-4}$ S/cm, but in particular more than $10^{-2}$ S/cm.

## Revendications

1. Procédé de fabrication d'au moins un élément électrochimique d'une batterie solide, comprenant une anode de conduction mixte, une cathode de conduction mixte ainsi qu'une couche électrolytique disposée entre anode et cathode, avec les étapes consistant à :

   - préparer ou fournir une anode de conduction mixte,
   - préparer ou fournir une cathode de conduction mixte,
   - modifier la surface d'au moins l'une des deux électrodes par une étape de procédé supplémentaire de telle sorte que, dans une couche de l'électrode proche de la surface à température ambiante, la conductivité électronique perpendiculairement à l'élément est abaissée à moins de $10^{-8}$ S/cm, alors que la conductivité ionique est supérieure à $10^{-6}$ S/cm,
   - dans lequel la modification de la surface d'au moins une électrode se fait par une réaction chimique avec un réactif liquide, gazeux ou solide ou par une transformation physique de phase,
   - rassembler ensuite l'anode et la cathode pour donner une batterie solide de telle sorte que la couche modifiée en surface d'au moins une électrode est disposée à la limite entre l'anode et la cathode en tant que couche électrolytique, et que les électrodes de conduction mixte sont ainsi séparées électroniquement.

2. Procédé selon la revendication précédente, dans lequel une anode comprenant $LiC_6$, $Li_{4,4}Sn$, $Li_{4,4}Si$, $LiTi_5O_{12}$, $Na_2Ti_6O_{13}Na$ ou le métal Li comme matériau actif - est utilisée.

3. Procédé selon l'une des revendications 1 à 2, dans lequel une cathode comprenant $LiCoO_2$, $LiMn_2O_4$, $Li(Ni,Co,Mn)O_2$, $LiFePO_4$, $LiNi_xCo_{1-x}O_2$, $LiNi_xMn_{2-x}O_4$, $NaFePO_4$, $NaCoO_2$, $Na_{2/3}$ $[Ni_{1/3}Mn_{2/3}]O_2$, $NaVPO_4F$ ou $Na_3V_2(PO_4)_3$ comme matériau actif est utilisée.

4. Procédé selon l'une des revendications 1 à 3, dans lequel la modification de la surface d'au moins une électrode s'effectue par une réaction chimique de l'électrode avec un réactif liquide.

5. Procédé selon l'une des revendications 1 à 3, dans lequel la modification de la surface d'au moins une électrode s'effectue par une réaction chimique de l'électrode avec un solide.

6. Procédé selon l'une des revendications 1 à 3, dans lequel la modification de la surface d'au moins une électrode s'effectue par une réaction chimique de l'électrode avec un réactif gazeux.

7. Procédé selon l'une des revendications 1 à 3, dans lequel la modification de la surface d'au moins une électrode s'effectue par une transformation physique de phase.

8. Procédé selon l'une des revendications 1 à 7, dans lequel les deux surfaces d'électrode sont modifiées.

9. Procédé selon l'une des revendications 1 à 8, dans lequel l'épaisseur de couche de la surface modifiée ou des surfaces modifiées atteint au total, lors de leur assemblage, une épaisseur de couche d'au minimum 0,1 nm et d'au maximum 100 $\mu$m, en particulier une épaisseur de couche comprise entre 0,1 $\mu$m et 10 $\mu$m.

10. Procédé selon l'une des revendications 1 à 9, dans lequel la modification de la surface d'au moins une électrode à température ambiante permet d'abaisser la conductivité électronique perpendiculairement à l'élément jusqu'à moins de $10^{-9}$ S/cm et avantageusement jusqu'à moins de $10^{-12}$ S/cm.

11. Procédé selon l'une des revendications 1 à 10, dans lequel un additif est incorporé à l'interface lors de l'assemblage des deux électrodes avec au moins une couche modifiée proche de la surface.

12. Procédé selon l'une des revendications 1 à 11, dans lequel la conductivité ionique à température ambiante, après la modification de la surface dans cette zone, est d'au moins $10^{-4}$ S/cm, en particulier néanmoins supérieure à $10^{-2}$ S/cm.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4072803 A
- DE 19832718 A1